# EUROPÄISCHE PATENTSCHRIFT

(11) **EP 1 538 366 B1**
(45) Veröffentlichungstag und Bekanntmachung des Hinweises auf die Patenterteilung: **08.02.2006**
(21) Anmeldenummer: 04026369.1
(22) Anmeldetag: 05.11.2004
(51) Int. Cl.: F16F 9/46

(54) **Bypassventil für Schwingungsdämpfer**
Bypass valve for damper
Soupape de déviation pour amortisseur

(30) Priorität: 05.12.2003 DE 10357020
(43) Veröffentlichungstag der Anmeldung: 08.06.2005
(73) Patentinhaber: ThyssenKrupp Bilstein GmbH, 58256 Ennepetal (DE)
(72) Erfinder: Hamers, Wolfgang, Ing., 52428 Jülich (DE)
(74) Vertreter: Adams, Steffen

(56) Entgegenhaltungen:
- EP-A- 0 355 357
- WO-A-96/15390
- DE-A1- 3 530 395
- DE-A1- 19 938 699
- DE-C1- 4 011 358

## Beschreibung

Die Erfindung betrifft ein Bypassventil eines hydraulischen Schwingungsdämpfers, über welches ein erster Arbeitsraum des Schwingungsdämpfers mit einem zweiten Arbeitsraum desselben hydraulisch koppelbar ist, mit einem einen Schaft und einen als Hohlkörper ausgebildeten Stellschieber aufweisenden Ventilschieber, wobei der Stellschieber durch einen ortsfesten, mindestens teilweise hohlen Führungskörper axial verschiebbar gelagert ist und mit mindestens einem im Mantel des Führungskörpers angeordneten Durchbruch derart zusammenwirkt, dass der freie Querschnitt des Durchbruchs durch Axialbewegung des Stellschiebers veränderbar ist, und mit einem Stellantrieb zum Bewegen des Stellschiebers in axialer Richtung.

Derartige Bypassventile sind aus dem Stand der Technik bekannt (DE 40 11 358 C1). Bei dem aus der DE 40 11 358 C1 bekannten Bypassventil bildet die hohle Kolbenstange den Führungszylinder, in dessen Innenraum der Stellschieber axial verschiebbar angeordnet ist. Der Stellschieber weist einen als Ventilkorb bezeichneten hohlzylindrischen Abschnitt auf, durch den bei axialer Verschiebung des Stellschiebers der freie Querschnitt der in der Mantelfläche der Kolbenstange vorgesehenen Bypassöffnungen stufenlos einstellbar ist. Auf diese Weise wird das Dämpfungsverhalten des Schwingungsdämpfers kontinuierlich eingestellt Die axiale Verschiebung des Stellschiebers erfolgt hier durch den im Inneren der Kolbenstange angeordneten Elektromotor.

Bei dem voranstehend beschriebenen Bypassventil besteht der Nachteil, dass beim Ein- und Ausfedern des Schwingungsdämpfers sehr hohe Störkräfte auf den Stellschieber einwirken, die insbesondere bei großen Ein- und Ausfedergeschwindigkeiten aus den hohen Strömungsgeschwindigkeiten, den Strömungsgeschwindigkeitsänderungen und den Richtungsänderungen der Dämpfungsflüssigkeit im Bereich der Bypassöffnungen resultieren. Je höher die Belastung des Schwingungsdämpfers, d.h. je größer der Druckunterschied zwischen den beiden durch den Arbeitskolben getrennten Arbeitsräumen des Schwingungsdämpfers ist, desto größer sind die Strömungsgeschwindigkeit und die Änderungen der Strömungsgeschwindigkeiten der Dämpfungsflüssigkeit und desto größer sind auch die von der Dämpfungsflüssigkeit auf den Stellschieber übertragenen Störkräfte. Diese Störkräfte erschweren erheblich ein exaktes Verschieben und Halten des Stellschiebers und damit ein genaues Einstellen der Dämpfungskraft. Im Extremfall machen sie es sogar unmöglich.

Eine weitere Folge der genannten Störkräfte ist, dass zwischen dem Führungszylinder und dem Stellschieber eine hohe Reibung vorliegt Diese muss überwunden werden, wenn der Stellschieber verschoben werden soll. Der für das Verschieben vorgesehene Elektromotor muss daher hinsichtlich seiner Leistung so ausgelegt sein, dass er auch hohe Reibungswiderstände zwischen Führungszylinder und Stellschieber überwinden kann. Deshalb sind bei der aus der DE 40 11 358 C1 bekannten Anordnung relativ leistungsstarke Elektromotoren erforderlich.

Weiterhin ist nachteilig, dass diese Elektromotoren im Betrieb größere Wärmemengen freisetzen, die nur sehr bedingt aus dem Inneren der Kolbenstange abgeführt werden können. In der Praxis hat dies zu einer Überhitzung und damit zu einem Versagen des Elektromotors geführt. Insbesondere bei hohen Belastungen des Schwingungsdämpfers ist die die Kolbenstange umgebende Dämpfungsflüssigkeit stark erwärmt, sodass eine effektive Abfuhr der vom Elektromotor erzeugten Wärme nicht in ausreichendem Maß realisiert werden kann.

Der Erfindung liegt die Aufgabe zugrunde, ein Bypassventil der eingangs genannten Art derart weiterzubilden, dass die von der Dämpfungsflüssigkeit auf den Stellschieber übertragenen Störkräfte minimiert werden. Insbesondere soll sichergestellt werden, dass der Stellschieber auch bei maximaler Druckdifferenz zwischen den Arbeitsräumen des Schwingungsdämpfers sicher und exakt in die vorgesehene Stellposition bewegt und dort gehalten werden kann.

Erfindungsgemäß wird diese Aufgabe dadurch gelöst, dass der Führungskörper axial und radial ortsfest angeordnet ist und der Stellschieber größer als der Führungskörper ausgebildet ist, sodass der Führungskörper einen Führungszapfen bildet, auf dem der Stellschieber axial verschiebbar geführt ist.

Bei der Erfindung nimmt der axial und radial feststehend angeordnete Führungskörper den Hauptteil der durch die strömende Dämpfungsflüssigkeit erzeugten Störkräfte auf. Auf diese Weise wird der Stellschieber als bewegliches Bauteil von diesen Störkräften weitgehend entkoppelt, sodass eine sichere und exakte Einstellung der Sollposition des Stellschiebers bei jedem Betriebszustand des Schwingungsdämpfers gewährleistet ist. Auch bei maximaler Druckdifferenz zwischen den Arbeitsräumen des Schwingungsdämpfers wirken somit auf den Stellschieber nur in sehr geringem Maße Störkräfte ein, sodass er in jedem Fall sicher und genau in seine Soll-Stellposition bewegt und dort gehalten werden kann.

Dadurch, dass der Führungskörper den Hauptteil der Störkräfte aufnimmt und diese über ihn abgeleitet werden, treten keine hohen Reibungskräfte zwischen dem Stellschieber und dem Führungskörper auf, die für ein Verschieben des Stellschiebers überwunden werden müssten. Der Antrieb, mit dem die Stellbewegungen des Stellschiebers ausgeführt werden, braucht deshalb keine hohe Leistung aufzuweisen. Vielmehr kann ein Antrieb mit geringer Ansteuerleistung bei geringer Verlustleistung gewählt werden, der eine geringe Eigenerwärmung aufweist und einen geringen Bauraum beansprucht. Es kann somit ein einfacher, preisgünstiger und platzsparender Stellantrieb verwendet werden. Aufgrund der geringen Eigenerwärmung des Stellantriebs kann dessen Versagen infolge Überhitzung vermieden werden.

Aus dem einschlägigen Stand der Technik ist es bekannt, dass Bypassventile, welche die Arbeitsräume der Zug- und Druckstufe eines Schwingungsdämpfers miteinander verbinden, an unterschiedlichen Stellen des Schwingungsdämpfers vorgesehen sein können. So ist es z.B. möglich, wie in der DE 40 11 358 C1 beschrieben, den Ventilschieber und den zugehörigen Stellantrieb in die Kolbenstange des Schwingungsdämpfers zu integrieren. Ebenso ist es z.B. möglich, das Bypassventil in ein separates Modulgehäuse zu integrieren, welches außen an dem Behälterrohr des Schwingungsdämpfers befestigt wird und über Bohrungen in der Behälterwand mit den Arbeitsräumen des Schwingungsdämpfers verbunden ist (Rucksackventil). Bei der vorliegenden Erfindung kommt es nicht darauf an, an welcher Stelle das Bypassventil angeordnet ist. Das erfindungsgemäße Bypassventil eignet sich grundsätzlich für alle bekannten Anordnungsvarianten.

Aus fertigungstechnischen Gründen ist es vorteilhaft, wenn der Stellschieber und der Führungskörper jeweils als Hohlzylinder ausgebildet sind, also zylindrische Querschnitte aufweisen. Es ist jedoch grundsätzlich auch möglich, von der Zylinderform abzuweichen. So kann z.B. ein gerade geschnittener Umfangsbereich vorgesehen sein, durch den die Hohlzylinderform in einem Umfangsbereich abgeplattet wird. Durch eine solche Form wird eine definierte und verdrehfeste Positionierung des Stellschiebers zum Führungskörper erreicht.

Eine robuste Bauweise des Stellschiebers wird dadurch erreicht, dass der hohle Stellschieber und der Schaft des Ventilschiebers einteilig ausgebildet sind und somit ein integrales Bauteil bilden. Würde der hohle Stellschieber als separates, z.B. hülsenförmiges Bauteil ausgebildet sein (was grundsätzlich möglich ist), so müsste eine verlässliche, dauerhafte Fügeverbindung zwischen der Stellschieberhülse und dem Schaft sichergestellt werden. Diese Fügeverbindung ist dagegen nicht erforderlich, wenn der Schaft und der hohle Stellschieber einteilig als integrales Bauteil ausgeführt sind.

Weil der Führungskörper die von der strömenden Dämpfungsflüssigkeit hervorgerufenen Störkräfte fast vollständig aufnimmt und ableitet, entstehen auch bei maximalen Belastungen des Schwingungsdämpfers keine großen Reibungskräfte zwischen dem Stellschieber und dem Führungskörper. Deshalb muss der Stellantrieb auch bei Maximalbelastung des Schwingungsdämpfers keine großen Reibungskräfte überwinden, um den Stellschieber axial in bestimmte Positionen zu bewegen. Der Stellantrieb kann daher als einfacher elektromechanischer Linearantrieb, z.B. vom Solenoidtyp, ausgebildet sein. In diesem Fall hat der Stellschieber die Funktion eines Ankers, der durch einen stromgesteuerten Elektromagneten in axialer Richtung hin und her bewegbar ist. Durch die Stromstärke, mit der der Elektromagnet angesteuert wird, wird die gewünschte Stellposition des Stellschiebers eingestellt.

Um das Bypassventil schließen zu können und somit eine ständige Leckage des Ventils zu vermeiden, ist es vorteilhaft als Sitzventil ausgebildet. In einer bevorzugten Ausführungsform ist am Führungskörper ein sich radial erstreckender Absatz ausgebildet, mit dem das freie Ende des hohlen Stellschiebers nach dem Prinzip Ventil/Ventilsitz zusammenwirkt. Dabei bildet die dem freien Ende des Stellschiebers zugewandte Oberfläche des Absatzes den Ventilsitz, auf den das freie Ende des Stellschiebers dichtend aufsetzbar ist. Es versteht sich, dass in diesem Fall der Durchbruch im Mantel des Führungskörpers oberhalb des Absatzes angeordnet ist, damit sein freier Querschnitt durch das axiale Verschieben des Stellschiebers einstellbar ist.

Durch während des Betriebs auftretende Druckschwankungen in der strömenden Dämpfungsflüssigkeit werden auf die Stirnfläche am freien Ende des Stellschiebers Störkräfte übertragen. Um diese Störkräfte möglichst gering zu halten, sollte die Wandstärke des hohlen Stellschiebers grundsätzlich so gering wie möglich bemessen sein, da auf diese Weise eine geringe Stirnflächengröße erreicht wird. Die Größe dieser Stirnfläche kann jedoch dadurch noch weiter verringert werden, dass an dem freien Ende des hohlen Stellschiebers eine Fase ausgebildet ist. Auf diese Weise wird eine minimale Stirnflächengröße am freien Ende des Stellschiebers erreicht, sodass die durch die Druckschwankungen übertragenen Störkräfte minimiert sind.

Um die Reibung zwischen dem Stellschieber und dem Führungskörper weiter zu verringern, ist mindestens eine Entlastungsnut in der Oberfläche des Führungskörpers vorgesehen. Mehrere in axialer Richtung hintereinander angeordnete Entlastungsnuten führen zu einer noch besseren Reduzierung der Reibung. Die Entlastungsnuten übernehmen dabei die Funktion eines Hydrolagers. Vorteilhaft sind die Entlastungsnuten oberhalb des Durchbruchs in die der Innenfläche des hohlen Stellschiebers zugewandte Mantelfläche des Führungskörpers eingebracht.

Bei dem erfindungsgemäßen Bypassventil ist in einer vorteilhaften Weiterbildung ein Distanzelement vorgesehen, das koaxial zu dem Stellschieber und dem Führungskörper angeordnet ist. Das Distanzelement umgibt den Stellschieber und ist vom Stellschieber beabstandet angeordnet. Auf diese Weise entsteht zwischen dem Stellschieber und dem Distanzelement ein Ringraum, der auch als Abströmkammer bezeichnet werden kann. In der Wandung des Distanzelementes sind Durchbrüche vorgesehen, über die der Ringraum mit dem Arbeitsraum der Zugstufe des Schwingungsdämpfers verbunden ist. Der Ringraum ist bei dem erfindungsgemäßen Bypassventil vorgesehen, um die Strömung der Dämpfungsflüssigkeit gezielt beeinflussen zu können. Durch die Höhe und Breite der Kammer, sowie durch Größe und Anzahl der Abströmöffnungen kann die Strömungsform der Dämpfungsflüssigkeit so beeinflusst werden, dass ein Strömungsanteil die Kammer sofort durch die Durchbrüche verlässt, während der restliche Strömungsanteil in der Kammer umgelenkt und auf die Stirnfläche des Stellschiebers geleitet wird, so dass dieser Strömungsanteil zur Kompensation der Störkräfte genutzt werden kann.

Weiterhin ist es vorteilhaft, einen Druckausgleich zwischen der Abströmkammer und der Rückseite, d.h. der dem Stellschieber abgewandten Seite des Ventilschiebers herzustellen. Dazu ist erfindungsgemäß eine Druckausgleichsbohrung im Schaft des Ventilschiebers vorgesehen, die den Raum auf der Rückseite des Ventilschiebers und die Abströmkammer miteinander verbindet. Das Vorsehen einer solchen Druckausgleichsbohrung ist eine auf dem technischen Gebiet der Erfindung durchaus bekannte Maßnahme. Der auf diese Weise erreichte Druckausgleich sorgt für eine Verringerung der am Ventilschieber angreifenden Stör kräfte.

Es gibt mehrere unterschiedliche Ausführungsformen der Erfindung, die sich darin unterscheiden, welches Dämpfungsverhalten der Schwingungsdämpfer aufweist, wenn der elektrisch angesteuerte Stellantrieb stromlos geschaltet ist, d.h. also am Antrieb kein Ansteuerstrom anliegt. Man kann in diesem Fall drei Schließzustände des Bypassventils unterscheiden: 1) stromlos geschlossen, 2) stromlos offen, 3) stromlos teiloffen. Der Schließzustand 1) entspricht dem Dämpfungsverhalten "hart", während Schließzustand 2) dem Dämpfungsverhalten "weich" und Schließzustand 3) einem mittleren Dämpfungsverhalten entspricht. Bei dem erfindungsgemäßen Bypassventil arbeitet der stromgesteuerte Stellantrieb des Ventilschiebers gegen eine Rückstellkraft, die z.B. durch eine Rückstellfeder realisiert werden kann. Das bedeutet, wenn der Stellantrieb stromlos geschaltet wird (z.B. als Folge eines plötzlichen Stromausfalls), schiebt die Rückstellkraft den Stellschieber in eine bestimmte Position. Durch eine gezielte Auswahl der Stelle, an welcher der mindestens eine Durchbruch in der Mantelfläche des Führungskörpers angeordnet ist, kann entweder eine vollständige Überdeckung des Durchbruchs durch den hohlen Stellschieber (= Zustand "stromlos geschlossen"), eine Teilüberdeckung (= Zustand "stromlos teiloffen") oder keine Überdeckung (= Zustand "stromlos offen") eingestellt werden.

Bei der Erfindung kann nicht nur der Führungskörper, sondern zusätzlich auch der Stellschieber einen oder mehrere Durchbrüche aufweisen. In diesem Fall kann durch die Positionierung der jeweiligen Durchbrüche im Führungskörper und im Stellschieber zueinander frei eingestellt werden, welcher Überdeckungsgrad der Durchbrüche im stromlosen Zustand vorliegen soll. So können die Durchbrüche in diesen beiden Bauteilen z.B. so angeordnet sein, dass sie im stromlosen Zustand einander zur Hälfte überdecken, dass also nur die Hälfte der Durchbruchsfläche frei durchströmbar ist. Dann weist der Schwingungsdämpfer im Falle eines plötzlichen Stromausfalls ein mittleres Dämpfungsverhalten auf.

Um den Energieverbrauch für die Dämpfkraftregelung möglichst gering zu halten, bietet es sich an, den Durchbruch in der Mantelfläche des Führungskörpers so zu positionieren, dass das Bypassventil im stromlosen Zustand offen ist. In diesem Zustand bewirkt hauptsächlich das Bypassventil die Dämpfkraft des Schwingungsdämpfers, sodass das Dämpfungsverhalten im Wesentlichen von den anderen Ventilen des Schwingungsdämpfers bestimmt wird. So kann im Schwingungsdämpfer beispielsweise ein so genanntes Komfortventil vorgesehen sein, welches eine vergleichsweise weiche Dämpfungskennlinie aufweist und den Dämpfungsmodus charakterisiert, in dem Kraftfahrzeuge erfahrungsgemäß hauptsächlich betrieben werden. Ist das Bypassventil im stromlosen Zustand offen, so ist der Strömungspfad zum Komfortventil geöffnet und der Großteil der Dämpferarbeit wird von dem Komfortventil übernommen. Als nachteilig kann dabei jedoch angesehen werden, dass der Dämpfer in Gefahrensituationen bei plötzlichem Stromausfall konstant weich geschaltet bleibt, sodass die Fahrsicherheit insbesondere bei schnellem Spurwechsel bei hoher Geschwindigkeit geringer ist, denn in solchen Situationen wäre ein härteres Dämpfungsverhalten erforderlich, um ein "Einknicken" des Fahrzeugaufbaus und damit ein Ausbrechen zu verhindern. Eine bessere Fahrsicherheit könnte dadurch erreicht werden, dass der Bypasskanal bei Stromausfall teilweise oder ganz geschlossen wird (stromlos teiloffen oder stromlos geschlossen), sodass der Dämpfer ein härteres Dämpfungsverhalten aufweist.

Wenn, ausgehend von der Einstellung "stromlos offen", eine Erhöhung der Dämpfkraft und somit ein sportlicheres Fahrverhalten eingestellt werden soll, wird ein Ansteuerstrom auf den Stellantrieb geleitet, sodass der Stellschieber in eine Position bewegt wird, in der er den Durchbruch im Mantel des Führungskörpers teilweise überdeckt. Dadurch erhöht sich der Strömungswiderstand des Bypassventils und die Dämpfkraft steigt an. Die maximale Dämpflcraft wird erreicht, wenn der Ansteuerstrom des Stellantriebs so groß ist, dass der Stellschieber eine Position einnimmt, in der der Durchbruch im Mantel des Führungskörpers vollständig überdeckt und das Bypassventil somit vollständig geschlossen ist.

Aus dem Stand der Technik auf dem Gebiet der Schwingungsdämpfer ist es bekannt, dass die Dämpfungswirkung von Bypassventilen nach dem Oberbegriff des Patentanspruchs 1 dadurch beeinflusst werden kann, dass der Durchbruch bzw. die Durchbrüche im Mantel des Führungskörpers eine bestimmte Kontur erhalten. Unterschiedliche Konturen weisen nämlich unterschiedliche Strömungswiderstände auf. Es versteht sich, dass dies auch bei dem erfindungsgemäßen Bypassventil ausgenutzt werden kann. Des Weiteren versteht es sich, dass der hohle Stellschieber nicht unbedingt eine geschlossene Mantelfläche aufweisen muss, sodass die Überdeckung der Durchbrüche im Mantel des Führungskörpers ausschließlich über die Position des freien Endes des Stellschiebers bestimmt wird. Vielmehr können in der Mantelfläche des Stellschiebers ebenfalls Durchbrüche vorgesehen sein, welche mit den Durchbrüchen im Mantel des Führungskörpers zusammenwirken, sodass der freie Durchflussquerschnitt für die Dämpfungsflüssigkeit durch den Überdeckungsgrad der Durchbrüche bestimmt wird. Selbstverständlich können die den Strömungswiderstand beeinflussenden Konturen anstatt an den Durchbrüchen im Mantel des Führungskörpers auch an denen im Mantel des Stellschiebers ausgebildet sein. Dies hat Vorteile hinsichtlich einer einfacheren Fertigung der konturierten Durchbrüche.

Das erfindungsgemäße Bypassventil kann bei Stoßdämpfern mit Ein- und Zweikammer-Wirkprinzip verwendet werden. Ist das Bypassventil in ein separates Modulgehäuse integriert, so können ein oder auch zwei Module in an sich bekannter Weise als Rucksackventile außen am Behälterrohr des Dämpfers befestigt werden. Um z.B. bei einem Einrohrstoßdämpfer eine voneinander unabhängige Verstellung der Zug- und der Druckstufe zu ermöglichen, können zwei außenadaptierte Module, welche das erfindungsgemäße Bypassventil enthalten, als Rucksackventile am Behälterrohr des Schwindungsdämpfers angebracht sein. Dabei wirkt das eine Modul ausschließlich in der Zugstufe, während das andere Modul ausschließlich in der Druckstufe wirksam ist. Auf diese Weise kann die so genannte Skyhook-Fähigkeit der Fahrzeugdämpfung erreicht werden.

Dem Fachmann ist es geläufig, das Dämpfungsverhalten eines einstellbaren Schwingungsdämpfers mit Hilfe eines Kennlinienfeldes im so genannten Dämpfungskraft-Geschwindigkeits-Diagramm (F-v-Diagramm) zu beschreiben. Um ein gleichmäßiges Änderungsverhalten des Schwingungsdämpfers beim Schalten seiner Dämpfungscharakteristik von einer Dämpfungskennlinie auf eine benachbarte Kennlinie zu gewährleisten, ist es erstrebenswert, wenn die Kennlinien im F-v-Diagramm zueinander möglichst äquidistant angeordnet sind (äquidistante Kennlinienspreizung). Die Erfindung macht es nun möglich, durch gezielte Auswahl unterschiedlicher Querschnittsformen für den Durchbruch bzw. die Durchbrüche, die im Führungskörper und ggf. im Stellschieber angeordnet sind, den Geschwindigkeitsbereich, in dem eine äquidistante Kennlinienspreizung im F-v-Diagramm vorliegt, gezielt auszuwählen.

Im Folgenden wird die Erfindung anhand einer Zeichnung näher erläutert. Es zeigen
- Fig.1:: das Bypassventil in Modulbauweise in einem axialen Längsschnitt,
- Fig.2:: einen Schwingungsdämpfer im axialen Längsschnitt mit zwei außenadaptierten Modulen, die das Bypassventil enthalten.

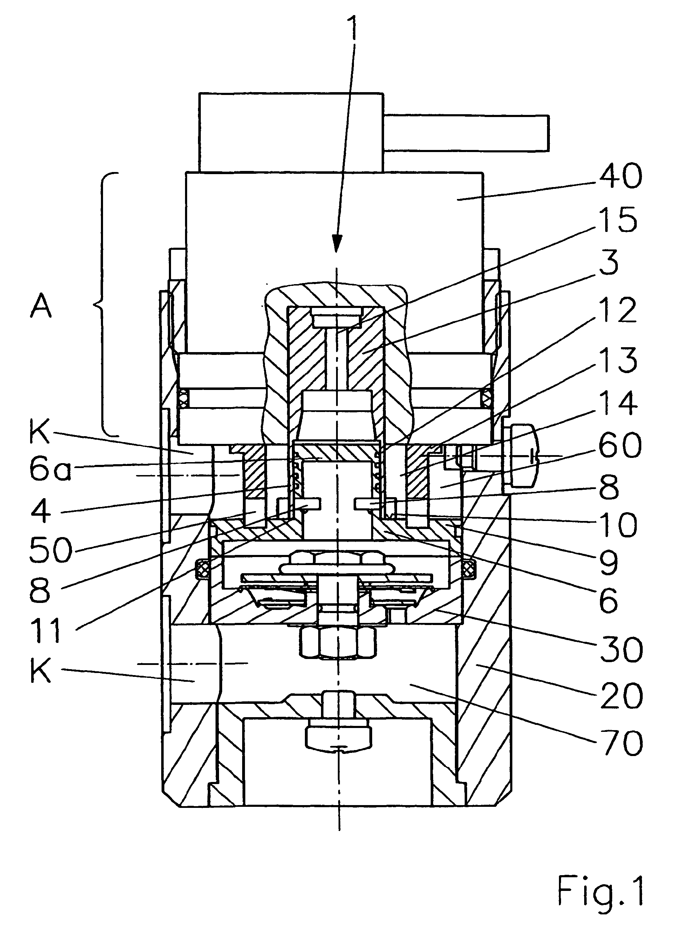

Das in Fig. 1 gezeigte Bypassventil ist als Rucksackventil-Modul ausgebildet, welches außen am Behälterrohr (nicht dargestellt) in an sich bekannter Weise adaptierbar ist. Das Ventil umfasst ein Modulgehäuse 20, in welchem ein Komfortventil 30 mit Rückschlagfunktion axial und radial fixiert angeordnet ist. Dieses Komfortventil 30 wirkt in bekannter Weise als Dämpfungsventil zwischen der Zug- und Druckstufe des (nicht dargestellten) Schwingungsdämpfers. In Fig. 1 ist vom Komfortventil 30 aus gesehen stromabwärts ein hohlzylindrischer Führungszylinder 6 angeordnet, der ebenfalls axial und radial fixiert im Modulgehäuse 20 gehalten ist. Der Führungszylinder 6 weist an seinem dem Komfortventil 30 zugewandten Ende einen sich in radialer Richtung zum Modulgehäuse 20 hin erstreckenden Absatz 9 auf, durch den der Führungszylinder 6 in axialer und radialer Richtung fixiert an dem Modulgehäuse 20 gehalten ist. In die vom Komfortventil 30 wegweisende axiale Richtung erstreckt sich der hohlzylindrische Teil 6a des Führungszylinders 6, sodass dieser hohlzylindrische Teil 6a einen Führungszapfen bildet, auf welchem ein hohlzylindrischer Stellschieber 4 axial verschiebbar geführt ist. In dem in Fig. 1 dargestellten Ausführungsbeispiel ist der Stellschieber 4 einstückig mit dem Schaft 3 des Ventilschiebers 1 ausgebildet.

Im Ausführungsbeispiel bildet der Schaft 3 einen Anker, der axial beweglich innerhalb der Spule eines stromgesteuerten Elektromagneten 40 angeordnet ist. Der Elektromagnet 40 bildet mit dem Anker 3 einen elektromechanischen Linear antrieb, welcher als Stellantrieb A für den Stellschieber 4 dient.

Der hohlzylindrische Stellschieber 4 ist umschlossen von einem ringförmigen Distanzelement 13. Zwischen dem Distanzelement 13 und dem Stellschieber 4 ist ein innerer Ringraum 14 vorhanden, welcher über in der Wand des Distanzelements 13 angeordnete Bohrungen 50 mit einem äußeren Ringraum 60 verbunden ist. Dieser Ringraum 60 kann entweder mit dem Arbeitsraum der Zug- oder der Druckstufe des (in Fig. 1 nicht dargestellten) Schwingungsdämpfers über eine Koppelbohrung K verbunden sein. Mit welchem Arbeitsraum der Ringraum 60 verbunden wird, hängt davon ab, in welcher Stufe (Zug oder Druck) das Komfortventil 30 seine Dämpfungswirkung entfalten soll.

Im Mantel des hohlzylindrischen Stellschiebers 4 sind Durchbrüche 8 vorhanden. Der freie Querschnitt dieser Durchbrüche 8 kann durch axiale Verschiebung des Stellschiebers 4 eingestellt werden. Wenn der Stellschieber 4 die Durchbrüche 8 vollständig freigibt, ist der äußere Ringraum 60 mit dem Raum 70 unter Zwischenschaltung des Komfortventils 30 hydraulisch gekoppelt. In diesem Zustand wird das Dämpfungsverhalten des Rucksackventils durch das Komfortventil 30 bestimmt. Bei dem in Fig. 1 dargestellten Ausführungsbeispiel ist der Raum 70 mit der Druckstufe des nicht dargestellten Schwingungsdämpfers verbunden, während der äußere Ringraum 60 mit der Zugstufe des Schwingungsdämpfers verbunden ist. Fährt die Kolbenstange des Schwingungsdämpfers bei Belastung in den Schwingungsdämpfer ein, so wird Dämpfungsfltissigkeit aus der Druckstufe in den Raum 70 und von diesem über das Komfortventil 30 in das Innere des hohlzylindrischen Führungszylinders 6 transportiert. Dabei ruft das Komfortventil 30 eine Dämpfungskraft hervor. Aus dem Innenraum des hohlzylindrischen Führungszylinders 6 strömt die Dämpfungsflüssigkeit durch die Durchbrüche 8 in den inneren Ringraum 14 und von diesem durch die Bohrungen 50 in den äußeren Ringraum 60, der wiederum mit der Zugstufe des Schwingungsdämpfers verbunden ist. Dabei entfaltet der freie Querschnitt der Durchbrüche 8 eine Drosselwirkung. Diese Drosselwirkung kann durch eine gezielte axiale Verschiebung des Stellschiebers 4, die zu einer Verringerung des freien Querschnitts der Durchbrüche 8 führt, gezielt gesteigert werden. Auf diese Weise lässt sich das Dämpfungsverhalten des Rucksackventils kontinuierlich einstellen.

Die axiale Verschiebung des Stellschiebers 4 auf dem Führungszylinder 6 erfolgt in aus dem Stand der Technik an sich bekannter Weise durch eine Veränderung des Ansteuerstroms, mit dem der Elektromagnet 40 angesteuert wird. Die dem Stellschieber 4 zugewandte Oberfläche des Absatzes 9 bildet eine Ventilsitzfläche 10, auf der der Stellschieber 4 mit seiner Stirnfläche dichtend aufsetzbar ist, sodass keine Leckage vorliegt. Die Wandung des hohlzylindrischen Stellschiebers 4 weist an der der Ventilsitzfläche 10 zugewandten Stirnseite eine Fase 11 auf, sodass die Größe der Stirnfläche des Stellschiebers 4 reduziert ist. Sie bietet somit weniger Angriffsfläche für die in der strömenden Dämpfungsflüssigkeit auftretenden Druckschwankungen, sodass die daraus resultierenden Störkräfte verringert werden, die auf den Stellschieber 4 übertragen werden.

Der Vorteil bei dem in Fig. 1 dargestellten Ausführungsbeispiel des erfindungsgemäßen Bypassventils besteht darin, dass sämtliche von der strömenden Dämpfungsflüssigkeit ausgehenden Störkräfte nahezu vollständig von dem axial und radial fixierten Führungszylinder 6 aufgenommen und in das Modulgehäuse 20 abgeleitet werden. Auf diese Weise wird der Stellschieber 4 von den durch die Strömung verursachten Störkräften entkoppelt. Ebenso wird die Reibung zwischen dem Führungszylinder 6 und dem Stellschieber 4 minimiert, sodass die axiale Verschiebung des Stellschiebers 4 mit einer vergleichsweise geringen Kraft des Stellantriebs A realisiert werden kann.

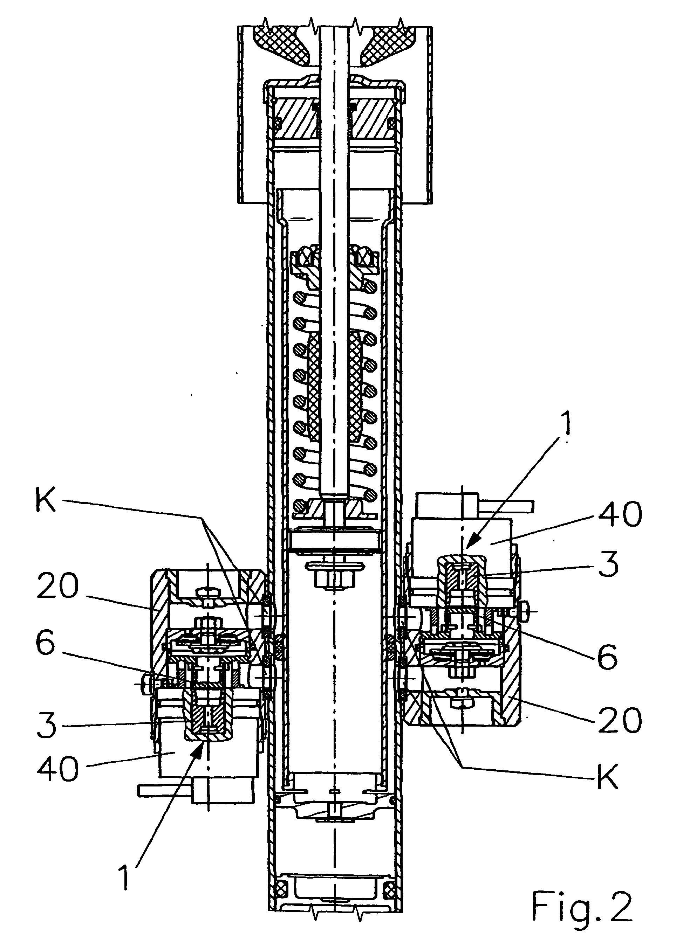

In Fig. 2 ist ein Schwingungsdämpfer dargestellt, an dessen äußerem Behälterrohr zwei Rucksackventile adaptiert sind, welche jeweils das erfindungsgemäße Bypassventil enthalten. Das in Fig. 2 auf der rechten Seite angeordnete Rucksackventil entspricht dem in Fig. 1 dargestellten Rucksackventil und ist in der Druckstufe des Schwingungsdämpfers wirksam. Das in Fig. 2 auf der linken Seite dargestellte Rucksackventil ist dagegen in der Zugstufe des Schwingungsdämpfers wirksam. Der Aufbau des in Fig. 2 auf der linken Seite dargestellten Rucksackventils entspricht dem Aufbau des in Fig. 1 dargestellten Rucksackventils. Lediglich wurde das in Fig. 2 auf der linken Seite dargestellte Rucksackventil um 180° verdreht zum auf der rechten Seite dargestellten Rucksackventil montiert. Auf diese Weise wird erreicht, dass das Komfortventil 30 in der umgekehrten Strömungsrichtung des Dämpfungsmediums wirksam ist, als dies bei dem anderen Rucksackventil der Fall ist.

Bei dem in Fig. 2 dargestellten Schwingungsdämpfer ist es möglich, das Dämpfungsverhalten in der Zug- bzw. Druckstufe unabhängig voneinander unterschiedlich einzustellen. Dadurch wird die Voraussetzung für eine nach dem Skyhook-Prinzip arbeitende Fahrzeugdämpfung geschaffen. Anstatt das komplette Modul um 180° zu drehen ist es auch möglich, nur das Komfortventil zu drehen.

### Bezugszeichenliste

- 1: Ventilschieber
- 3: Schaft
- 4: Stellschieber
- 6: Führungskörper
- 6a: hohlzylindrischer Teil
- 8: Durchbruch
- 9: Absatz
- 10: Ventilsitzfläche
- 11: Fase
- 12: Entlastungsnut
- 13: Distanzelement
- 14: innerer Ringraum
- 15: Druckentlastungsbohrung
- 20: Modulgehäuse
- 30: Komfortventil
- 40: Elektromagnet
- 50: Bohrung
- 60: äußerer Ringraum
- 70: Raum
- A: Stellantrieb
- K: Koppelbohrung

## Patentansprüche

1. Bypassventil eines hydraulischen Schwingungsdämpfers, über welches ein erster Arbeitsraum des Schwingungsdämpfers mit einem zweiten Arbeitsraum desselben hydraulisch koppelbar ist, mit einem einen Schaft (3) und einen als Hohlkörper ausgebildeten Stellschieber (4) aufweisenden Ventilschieber (1), wobei der Stellschieber (4) durch einen ortsfesten, mindestens teilweise hohlen Führungskörper (6) axial verschiebbar gelagert ist und mit mindestens einem im Mantel des Führungskörpers (6) angeordneten Durchbruch (8) derart zusammenwirkt, dass der freie Querschnitt des Durchbruchs (8) durch Axialbewegung des Stellschiebers (4) veränderbar ist, und mit einem Stellantrieb (A) zum Bewegen des Stellschiebers (4) in axialer Richtung, **dadurch gekennzeichnet, dass** der Führungskörper (6) axial und radial ortsfest angeordnet ist und der Stellschieber (4) größer als der Führungskörper (6) ausgebildet ist, sodass der Führungskörper (6) einen Führungszapfen bildet, auf dem der Stellschieber (4) axial verschiebbar geführt ist.

2. Bypassventil nach Anspruch 1, **dadurch gekennzeichnet, dass** der Stellschieber (4) und der Führungskörper (6) als Hohlzylinder ausgebildet sind.

3. Bypassventil nach Anspruch 1 oder 2, **dadurch gekennzeichnet, dass** der Schaft (3) und der Stellschieber (4) einteilig als integrales Bauteil ausgeführt sind.

4. Bypassventil nach einem der Ansprüche 1 bis 3, **dadurch gekennzeichnet, dass** der Stellantrieb (A) als elektromechanischer Linearantrieb ausgebildet ist, der ein stromgesteuertes Elektromagnetelement und ein Ankerelement umfasst, wobei der Stellschieber (4) die Funktion des Ankerelementes übernimmt, welches in Abhängigkeit von der Stärke des Stroms, mit dem das Elektromagnetelement angesteuert wird, axial in eine bestimmte Stellposition bewegbar ist.

5. Bypassventil nach einem der Ansprüche 1 bis 4, **dadurch gekennzeichnet, dass** der Führungskörper (6) an seinem dem Schaft (3) des Ventilschiebers (1) gegenüber liegenden Ende einen sich senkrecht zur Längsachse des Führungskörpers (6) erstreckenden Absatz (9) aufweist, dessen dem Stellschieber (4) zugewandte Oberfläche eine Ventilsitzfläche (10) bildet, auf die das freie Ende des Stellschiebers (4) dichtend aufsetzbar ist.

6. Bypassventil nach einem der Ansprüche 1 bis 5, **dadurch gekennzeichnet, dass** der hohle Stellschieber (4) an seinem vom Schaft (3) abgewandten Ende eine Fase (11) aufweist

7. Bypassventil nach einem der Ansprüche 1 bis 6, **dadurch gekennzeichnet, dass** die Mantelfläche des Führungskörpers (6) mindestens eine Entlastungsnut (12) aufweist, die mit der inneren Oberfläche des Stellschiebers (4) in Wirkverbindung steht.

8. Bypassventil nach Anspruch 7, **dadurch gekennzeichnet, dass** mindestens eine Entlastungsnut (12) oberhalb des Durchbruchs (8) angeordnet ist.

9. Bypassventil nach einem der Ansprüche 1 bis 8, **dadurch gekennzeichnet, dass** koaxial zu dem Stellschieber (4) und dem Führungskörper (6) ein Distanzelement (13) angeordnet ist, welches den Stellschieber (4) umgibt und beabstandet von diesem angeordnet ist, sodass zwischen dem Stellschieber (4) und dem Distanzelement (13) ein Ringraum (14) vorhanden ist.

10. Bypassventil nach einem der Ansprüche 1 bis 9, **dadurch gekennzeichnet, dass** der Schaft (3) des Ventilschiebers (1) eine Druckentlastungsbohrung (15) aufweist.

11. Bypassventil nach einem der Ansprüche 1 bis 10, **dadurch gekennzeichnet, dass** die Querschnittsform des mindestens einen Durchbruchs (8) so gestaltet ist, dass der Geschwindigkeitsbereich, in dem eine äquidistante Kennlinienspreizung im Dämpfkraft-Geschwindigkeit-Diagramm vorliegt, gezielt ausgewählt wird.

## Claims

1. Bypass valve of a hydraulic vibration damper, by means of which a first working chamber of the vibration damper can be hydraulically coupled to a second working chamber thereof, having a valve slide (1) which comprises a shaft (3) and an actuating slide (4) which is formed as a hollow body, wherein the actuating slide (4) is mounted in an axially displaceable manner by means of a positionally fixed, at least partially hollow guide body (6) and cooperates with at least one opening (8), which is disposed in the periphery of the guide body (6), such that the free cross-section of the opening (8) can be changed by the axial movement of the actuating slide (4), and having an actuating drive (A) for moving the actuating slide (4) in an axial direction, **characterised in that** the guide body (6) is disposed axially and radially in a fixed position and the actuating slide (4) is formed larger than the guide body (6), so that the guide body (6) forms a guide spigot, on which the actuating slide (4) is guided in an axially displaceable manner.

2. Bypass valve as claimed in claim 1, **characterised in that** the actuating slide (4) and the guide body (6) are formed as hollow cylinders.

3. Bypass valve as claimed in claim 1 or 2, **characterised in that** the shaft (3) and the actuating slide (4) are formed in one piece as an integral component.

4. Bypass valve as claimed in any one of claims 1 to 3, **characterised in that** the actuating drive (A) is formed as an electromechanical linear drive which comprises a current-controlled electromagnet element and an armature element, wherein the actuating slide (4) assumes the function of the armature element which can be moved axially to a predetermined desired position in dependence upon the magnitude of the current with which the electromagnet is controlled.

5. Bypass valve as claimed in any one of claims 1 to 4, **characterised in that** on its end lying opposite to the shaft (3) of the valve slide (1), the guide body (6) comprises a shoulder (9) which extends perpendicularly with respect to the longitudinal axis of the guide body (6) and whose surface facing the actuating slide (4) forms a valve seat surface (10), on to which the free end of the actuating slide (4) can be placed in a sealing manner.

6. Bypass valve as claimed in any one of claims 1 to 5, **characterised in that** the hollow actuating slide (4) comprises a chamfer (11) on its end remote from the shaft (3).

7. Bypass valve as claimed in any one of claims 1 to 6, **characterised in that** the peripheral surface of the guide body (6) comprises at least one relief groove (12) which is operatively connected to the inner surface of the actuating slide (4).

8. Bypass valve as claimed in claim 7, **characterised in that** at least one relief groove (12) is disposed above the opening (8).

9. Bypass valve as claimed in any one of claims 1 to 8, **characterised in that** a spacer element (13) is disposed coaxially with respect to the actuating slide (4) and the guide body (6), surrounds the actuating slide (4) and is disposed at a spaced interval therefrom, so that an annular space (14) is provided between the actuating slide (4) and the spacer element (13).

10. Bypass valve as claimed in any one of claims 1 to 9, **characterised in that** the shaft (3) of the valve slide (1) comprises a pressure relief bore (15).

11. Bypass valve as claimed in any one of claims 1 to 10, **characterised in that** the cross-sectional shape of the at least one opening (8) is formed such that the velocity range, in which an equidistant characteristic spread is present in the damping force-velocity diagram, is selected in a specific manner.

## Revendications

1. Soupape de dérivation pour un amortisseur hydraulique, par l'intermédiaire de laquelle une première chambre de travail de l'amortisseur peut être couplée hydrauliquement à une seconde chambre de travail de celui-ci, avec une soupape à tiroir (1) présentant un axe (3) et un tiroir d'ajustement (4) réalisé sous la forme d'un corps creux, dans laquelle le tiroir d'ajustement (4) est monté à déplacement axial par l'intermédiaire d'un organe de guidage (6)fixe, au moins partiellement creux, et coopère avec au moins une lumière (8) prévue dans la paroi de l'organe de guidage (6) de telle sorte que la section libre de la lumière (8) peut être modifiée par un déplacement axial du tiroir d'ajustement (4), et avec i, ne commande d'ajustement (A) pour déplacer le tiroir d'ajustement (4) dans la direction axiale, **caractérisée en ce que** l'organe de guidage (6) est fixe dans le sens axial et le sens radial, et le tiroir d'ajustement (4) est plus gros que l'organe de guidage (6), de telle sorte que l'organe de guidage (6) forme une broche de guidage sur laquelle le tiroir d'ajustement (4) est guidé à déplacement axial.

2. Soupape de dérivation selon la revendication 1, **caractérisée en ce que** le tiroir d'ajustement (4) et l'organe de guidage (6) sont réalisés sous la forme d'un cylindre creux.

3. Soupape de dérivation selon la revendication 1 ou 2, **caractérisée en ce que** l'axe (3) et le tiroir d'ajustement (4) sont fabriqués en une pièce, sous la forme d'un seul constituant.

4. Soupape de dérivation selon l'une des revendications 1 à 3, **caractérisée en ce que** la commande d'ajustement (A) est réalisée sous la forme d'une commande électromécanique linéaire, qui comprend un électro-aimant commandé par un courant et un induit, le tiroir d'ajustement (4) remplissant la fonction de l'induit, qui est déplacé axialement dans une position déterminée en fonction de l'intensité du courant qui active l'électro-aimant.

5. Soupape de dérivation selon l'une des revendications 1 à 4, **caractérisée en ce que** l'organe de guidage (6) présente à son extrémité opposée à l'axe (3) de la soupape à tiroir (1), un épaulement (9) s'étendant perpendiculairement à l'axe longitudinal de l'organe de guidage (6), dont la face tournée vers le tiroir d'ajustement (4) forme un siège de soupape (10) sur lequel l'extrémité du tiroir d'ajustement (4) peut venir s'appuyer de manière étanche.

6. Soupape de dérivation selon l'une des revendications 1 à 5, **caractérisée en ce que** le tiroir d'ajustement (4) creux présente un chanfrein (11) à son extrémité opposée à l'axe (3).

7. Soupape de dérivation selon l'une des revendications 1 à 6, **caractérisée en ce que** la paroi de l'organe de guidage (6) présente au moins une rainure d'équilibrage (12) qui se trouve en liaison de travail avec la surface du tiroir d'ajustement (4).

8. Soupape de dérivation selon la revendication 7, **caractérisée en ce que** la rainure d'équilibrage (12) au moins présente est disposée au-dessus de la lumière (8).

9. Soupape de dérivation selon l'une des revendications 1 à 8, **caractérisée en ce que** qu'un organe d'écartement (13) est disposé coaxialement au tiroir d'ajustement (4) et à l'organe de guidage (6), entoure le tiroir d'ajustement (4) et se trouve à distance de celui-ci, de telle sorte qu'une chambre annulaire (14) est formée entre le tiroir d'ajustement (4) et l'organe d'écartement (13).

10. Soupape de dérivation selon l'une des revendications 1 à 9, **caractérisée en ce que** l'axe (3) du tiroir d'ajustement (1) présente un alésage (15) d'équilibrage de la pression.

11. Soupape de dérivation selon l'une des revendications 1 à 10, **caractérisée en ce que** la forme en section transversale de la lumière (8) au moins présente est telle que le domaine de vitesse dans lequel il existe une équidistance des courbes caractéristiques dans le diagramme force d'amortissement-vitesse, est choisi.
